# EUROPEAN PATENT APPLICATION

(11) **EP 2 735 592 A1**
(43) Date of publication of application: **28.05.2014**
(21) Application number: 13171038.6
(22) Date of filing: 07.06.2013
(51) Int. Cl.: C09D 5/00, C10M 107/04, C10M 107/06, C10M 107/12, C10M 125/02, C10M 125/10, C10M 125/26, C10M 125/30, C10M 147/02, C10M 107/08, C10M 107/28, C10M 107/34, C10M 125/22

(54) **Coating of a metal sheet or strip**

(30) Priority: 26.11.2012 EP 12194293
(71) Applicant: Hydro Aluminium Rolled Products GmbH, 41515 Grevenbroich (DE)
(72) Inventor: Jupp, Simon, 53113 Bonn (DE); Schubert, Günter, Dr., 53359 Rheinbach (DE)
(74) Representative: Cohausz & Florack

(57) **Abstract**

In order to provide an improved handling and preparation of metal sheets or strips, in particular allowing a more secure handling of the metal sheet or strip while achieving at the same time a less laborious and more accurate lubrication before forming of the metal sheet or strip, there is provided a coating of a metal sheet or strip comprising a lubricant and a protective base material, wherein the lubricant is contained in the protective base material and wherein the protective base material is at least in part selectively removable. There is also provided a metal sheet or strip capable of forming, in particular of superplastic forming, and having a coating according to the invention at least partially on one or on both sides of the metal sheet and a method for manufacturing a metal sheet or strip according to the invention comprising the steps of providing a metal sheet or strip capable of forming, in particular of superplastic forming, and applying a coating according to the invention.

## Description

The invention relates to a coating of a metal sheet or strip, a metal sheet or strip and a method for manufacturing a coated metal sheet or strip.

It is well known in the state of the art to use metal sheets for forming. Such forming operations may take place by means of forming tools, for example a form die and a form punch. It is also known to perform such forming operations at temperatures elevated from room temperature, for example at some hundred degrees Celsius. Particularly at higher forming temperatures, it might be necessary to provide a lubricant on the metal sheet to be formed. Generally speaking, the lubricant reduces the friction between the sheet to be formed and the forming tool. Additionally, the lubricant may reduce the risk of sticking of the metal sheet to the forming tool.

In the state of the art, the lubricants may be applied on each sheet right before the forming operation, for example suspended in a liquid. A much earlier application of the lubricant would impede and complicate the prior handling of the sheet. Additionally, a too early application of the lubricant to the metal sheet to be formed may promote the sticking of dust and dirt to the coated metal sheet.

The lubricant may be applied to the metal sheet by spraying or by means of a roller, for example. In each case, the application has to be done right before the forming of the metal sheets. This is done manually, which has the drawback of a very uneven distribution of lubricant. The amount of lubricant may vary from sheet to sheet or even from region to region on the surface of a single sheet. Furthermore, in case the lubricant is applied in the form of a suspension, it is necessary for the suspension to undergo a drying process before forming can take place.

Therefore, the application of a lubricant constitutes a separate manual work step for the preparation of the metal sheet for the forming procedure, which is very time consuming and which may furthermore result in inhomogeneous distributions of the lubricant.

The handling of the metal sheets before the forming procedure without damaging the metal sheet may constitute a further problem in the state of the art. The surfaces of the metal sheets need to be as pristine as possible, since damages may result in poor or unsatisfying forming operations. This is particularly true for special forming operations such as superplastic forming.

In order to prevent the surfaces of the metal sheets from scratches, it is known to provide paper layers between individual metal sheets to separate them. However, handling, such as (re)stacking, can still lead to superficial scratches of the metal sheets. It is further known, to use protective plastic foils or films for additional protection of the metal sheets. However, the foil or film is mainly used to provide surface protection during transportation and is either used on the outside sheets or on both sides for protection against water and dirt. Before forming of the metal sheet and before manual application of the lubricant, these protective foils, films or layers principally have to be removed.

These surface protection measures constitute a further work step and therefore further increase the amount of time needed for preparing the metal sheet for forming, while the protection of the metal sheet surfaces during handling is still not satisfying.

In view of the aforementioned, it is an object of the present invention to avoid the problems in the state of the art and provide an improved handling and preparation of metal sheets or strips, in particular allowing a more secure handling of the metal sheet or strip while achieving at the same time a less laborious and more accurate lubrication before forming of the metal sheet or strip.

According to a first teaching of the current invention, the above object is achieved by a coating of a metal sheet or strip comprising a lubricant and a protective base material, wherein the lubricant is contained in the protective base material and wherein the protective base material is at least in part selectively removable.

A metal sheet may in particular be a substantially planar sheet, blank or plate. Typical metals capable of being formed are steel and steel alloys or preferably aluminium and aluminium alloys, for example. A metal strip may also be provided in the form of a coil, for example.

The lubricant can basically be any kind of substance suitable for providing a lubrication of the metal sheet or strip during forming. The lubricant is in particular primarily responsible for providing lubricating properties of the coating. The matrix of the coating does not necessarily have lubricating properties.

The protective base material may generally consist of any kind of material suitable for a mechanical protection of the metal sheet or strip. It may in particular comprise natural or synthetic polymers, while synthetic polymers are preferred. The protective base material (e.g. a matrix) is in particular primarily responsible for providing mechanically protective properties of the coating.

By containing the lubricant in the protective base material, the lubricant can be provided in the coating without necessarily directly showing lubricating behaviour on the surface of the metal sheet.

Under a selective removability of the protective base material, it is in particular understood, that the protective base material can be removed substantially without removing the lubricant. This happens preferably by external influence. Such a removal may be a thermal, a chemical and/or a physical removal, for example. That means that the removal may be performed, accelerated and/or triggered for instance by temperature, by a chemical, e.g. oxygen or a solvent, or by radiation or by any combination.

It is in particular preferred that the selective removal comprises an at least partially decomposition, in particular a depolymerisation, of the protective base material. For polypropylene, for example, the decomposition in form of a depolymerisation is initiated and/or accelerated by oxygen. Depolymerisation can be triggered by radicals and/or UV-light, for instance, and is in particular a radical chain reaction. The depolymerisation can also be accompanied by side reactions, such as oxidative degradation.
A thermal removal may in particular be realized by different properties such as volatilities of decomposition products at certain temperatures, different evaporation temperatures and/or different boiling points and/or sublimation temperature of the protective base material and the lubricant. For this, the lubricant has preferably a higher, for example, boiling point, i.e. a lower volatility than the protective base material. In case a decomposition or depolymerisation in particular of the protective base material takes place, the volatility of the decomposition products is relevant.

A chemical and/or physical removal or combination thereof may be realized by a chemical which selectively etches and/or dissolves substantially only the protective base material. An example is the hydrolysis of a polyester.
However, alternatively or additionally, a physical removal, for example by irradiation, such as but not limited to UV-radiation or IR-radiation, may be applied as well. A physical removal may also be realized by means of a selective physical dissolution of the base material, for example.

When the protective base material is at least in part selectively removable, it is understood that at least such an amount of the protective base material can be selectively removed that the coating can provide lubricating properties. In particular at least 20% by weight, preferably at least 50% by weight, most preferably at least 90% by weight of the protective base material is selectively removable. It is preferred if essentially all, that means at least 99% by weight, of the base material is removed. That means that in particular a complete removal of the protective base material of up to 100% is possible.

In a first state, the coating can therefore be provided with mechanically protective properties without substantially showing lubricating properties, while the coating can be brought into a second state, in which the mechanically protective properties are reduced or eliminated due to the selective removal and the coating shows lubricating properties.

As a result, a coating can be provided which can provide both, mechanical protective properties and lubricating properties. Due to the mechanical protective properties, a metal sheet or strip coated with an inventive coating can be handled and protected from surface damages, such as scratches. After handling the metal sheet, the protective base material can at least partially be selectively removed, for instance by heating, in order to provide a lubricant on the surface of the metal sheet or strip. Any manual removal of protection films, foils or sheets and any manual application of lubricant can be dispensed with. Since the amount of applied lubricant can be precisely defined by the amount of lubricant in the coating and/or by adjusting the coating thickness, a more precise application of lubricant is provided at the same time. Therefore, by allowing a more secure handling of the metal sheet or strip while achieving at the same time a less laborious and more accurate preparation before forming of the metal sheet, an improved handling and lubrication of metal sheets or strips can be provided by the coating according to the invention.

The coating is particularly advantageous for the coating of metal sheets or strips capable of superplastic forming, generally taking place at higher temperatures. In that case a lubricant suitable for superplastic forming may be used for the coating, i.e. the lubricant is suitable for providing sufficient lubricating properties for the typical temperatures and durations of a superplastic forming process.

Superplastic forming is considered as a special case of hot forming. In the superplastic state of metals, such as aluminium or aluminium alloys, tensile elongations of over 1000% or even of over 2000% are possible without necking. In particular, superplasticity has been demonstrated in several aluminium alloys such as AA 7475; AlSil.2; AlCu3.3; AlCu6Zr0.5; AlCu6Zr0.4 (AA 2004 SPF); AlCu; AlZn6Mg2, 3Cu1, 6Cr; AlZnCa; AlMg4.5Mn AlLiCuMgZr (AA 8090, 8091, 2090) or AlMgMn (AA5083).

However, the superplastic aluminium alloys AA 5083, 2004 and 7475 are particularly preferred.

The metal sheet or strip has preferably a thickness between 0.5mm and 3mm, particularly between 1.2mm and 2.5mm. The handling of metal sheets of such thicknesses is particularly facilitated by using a coating according to the invention.

A coating according to the invention has preferably a thickness between 20µm and 200µm, more preferably between 40µm and 100µm. It was found that these thicknesses are sufficient for the protection of the metal sheet and can contain a sufficient amount of lubricant.

While the ratio of protective base material to lubricant may vary depending on the materials used, it was found that particularly a ratio of protective base material to lubricant of between 2 to 6, in particular between 3 and 5, is advantageous. A ratio of 4 would for example mean that there is 80% by weight of the protective base material and 20% by weight of the lubricant.

According to an embodiment of the coating according to the invention, the lubricant comprises graphite, boron nitride, brucite, montmorillonite, mica, muscovite, molybdenum sulfide, polytetrafluoroethylene (PTFE, Teflon) and/or talcum. However, further layered minerals may be used, as well.

These lubricants are particularly suitable for hot forming and for superplastic forming conditions.

Graphite has satisfying lubricating properties at both high and low temperatures with substantially no risk of undesired chemical reactions.

Boron nitride as well can be used for lubricating at low and particularly high temperatures of up to 1200°C. Furthermore boron nitride can be used in oxidizing atmospheres and without the presence of fluidic or gaseous molecules in between, which are necessary for the lubricating properties of graphite. Furthermore, boron nitride may be advantageous when the electrical conductivity needs to be minimized.

It is in particular preferred to use dry and/or inorganic solid lubricants, since they are especially suitable for high temperature applications.

The particle size of the lubricant, while dependent on the actual lubricant, is preferably below 15µm, more preferably below 10µm. The particles of the lubricant may in particular have a plate-like or a flake-like shape. The particles of the lubricant may have an aspect ratio of about 5 to 100. The size of a particle is understood to mean the diameter of the particle along its longest dimension.

According to a further embodiment of the coating according to the invention, the protective base material is at least partially thermally, chemically and/or physically removable, preferably by evaporation, in particular without a significant pyrolysis deposit.

By choosing a protective base material, which is in particular thermally removable, the effort for removing the mechanical protection is minimized. Additionally, too much protective base material remainder and/or pyrolysis deposit on the surface of the metal sheet or strip can be reduced. The presence of significant pyrolysis deposits during the forming process may impede the forming operation.

A thermal removing may comprise an at least partial depolymerisation and/or evaporation of the protective base material. The thermal removal may in particular take place above typical handling temperatures of the metal sheet or strip.

However, residues of the protective base material may remain on the surface of the metal sheet. It has actually been found, that the residue of the protective base material can improve the stickiness of the lubricant to the metal sheet or strip during forming, such that less lubricant remains in the forming tool.

Preferably, the protective base material is at least partially thermally, chemically and/or physically removable without or with minimal foaming. This can be achieved by choosing suitable combinations of protective base material and lubricant and a suitable removing mechanism. This can in particularly be realized by thermally removable protective coatings.

According to another embodiment of the coating according to the invention, the protective base material is a polymer matrix, preferably comprising polymers of propylene, ethylene, styrene, isobutylene, tetrahydrofurane, methylmethacrylate and/or alphamethylstyrene. Further materials may be utilized, however. The polymer matrix provides a medium for binding and holding lubricant to a solid and provides mechanical protective properties. A polymer base material as mentioned above is further mostly resistant to many chemical solvents, bases and acids and can provide a sufficient mechanical protection. The polymer matrix is preferably a thermoplastic material, facilitating a thermal removal of the protective base material.

It is particularly preferred if the protective base material is or comprises polypropylene (PP). PP is readily available and can be thermally removed by evaporation from the metal sheet surface by depolymerisation, which process can also include oxidative degradation, for example. The melting point of PP is generally between 130 - 171°C, depending on the specific type of PP. Thus the mechanical protective properties may be provided up to these temperatures. A depolymerisation generally takes place above approximately 300°C.

According to another embodiment of the coating according to the invention, the lubricant is compounded into the protective base material and/or introduced into the protective base material in the form of a masterbatch. The provision of a coating according to the invention can be facilitated in these ways. The lubricant can be embedded in a polymer matrix in this manner, for example. Additionally, the concentration of the lubricant can be precisely adjusted in the coating for different demands or requirements.

According to another embodiment of the coating according to the invention, the coating comprises one or more additional functional layers, in particular providing one ore more functions of friction reduction, bonding, protection of the lubricant, isolation of the lubricant and separability. Here, separability is understood to mean the separability of different metal strips or sheets, for example in a stack. In that case at least one layer of the coating may comprise the lubricant and the protective base material. One or more additional layers may be situated below or above the layer comprising the lubricant and the protective base material. An additional layer may improve the bonding the substrate, for example to the metal sheet or strip or to the layer below or above and. The additional layer may provide adhesive properties between the coating and the metal sheet or strip, for example. This layer would be situated between the metal sheet or strip and the layer comprising the lubricant and the protective base material. There may be more than one layer containing the same or different kinds of lubricant.

Additionally or alternatively, an additional layer may provide specific surface properties for the coating. Such a layer would be situated above the layer comprising the lubricant and the protective base material. Specific surface properties may be realized by a specific surface topography, for example. This can facilitate the handling of the coated metal sheets or strips, for example by increasing or reducing the friction between the metal sheets or strips in particular in a stack. This can also increase the separability of the metal sheets or strips in contact.

Further functional upper, lower or intermediate layers may however be provided. Layer structures of more than one layer can in particular be provided by co-extrusion, for example.

According to another embodiment according to the invention, the coating has mechanical protective properties in a first temperature range TR₁ and the coating has lubricating properties in a second temperature range TR₂, higher than the first temperature range TR₁, in particular for supporting the forming of the metal sheet or strip.

In the first temperature range TR₁ the coating shows mechanical protective properties and is therefore suitable to protect a metal sheet or strip provided with the coating from superficial scratches and damages in the coated area. That means that in the first temperature range TR₁ the properties of the protective base material dominate the behaviour or the properties of the coating. The temperature range TR₁, however, does not necessarily need to cover the whole temperature range in which the coating shows mechanical protective properties. The temperature range TR₁ may also be a sub-range of this temperature range. In the first temperature range TR₁ the coating may in particular show mainly or substantially only mechanical protective properties.

A temperature range may be a range of only a few degrees or even less or it may be a range covering tens or even hundreds of degrees.

The first temperature range TR₁ can in particular include the typical temperatures at which the metal sheets or strips coated with the coating are handled, for example (re)stacked, stocked and/or transported. The first temperature range may in particular include room temperature, i.e. 20°C and/or 25°C, but it may reach from far below room temperature to as high as 100°C or even above.

In the second temperature range TR₂, the coating has lubricating properties, in particular for supporting forming of the metal sheet or stip. That means that in the second temperature range TR₂ the properties of the lubricant dominate the behaviour or properties of the coating. The temperature range TR₂, however, does not necessarily need to cover the whole temperature range in which the coating shows lubricating properties. The temperature range TR₂ may also be a sub-range of this temperature range. In the second temperature range TR₂ the coating may in particular show mainly or substantially only lubricating properties for forming the metal sheet or strip. The coating or the lubricant is therefore in particular suitable for hot forming or superplastic forming.

That the second temperature range TR₂ is higher than the first temperature range TR₁ is understood to mean that the second temperature range at least partially extends to higher temperatures than the first temperature range TR₁. The temperature ranges TR₁ and TR₂ may be separated from each other providing a transition range between them or there may be an overlap. The temperature ranges may also be adjacent to each other.

According to a further embodiment of the coating according to the invention, the temperature range TR₂ comprises at least a temperature = 400°C, in particular = 450°C. Preferably, the temperature range TR₂ comprises at least a temperature = 400°C and = 600°C, preferably = 400°C = 520°C. In this manner, it can be made sure that lubricating properties can be provided at such temperatures. Lubricating properties in these temperature ranges are specifically advantageous for superplastic forming of aluminium. However, lubricating properties may also be provided at other temperatures.

According to another teaching of the invention, the objective is also achieved by a metal sheet or strip capable of forming, in particular superplastic forming, and having a coating according to the invention at least partially on one or on both sides of the metal sheet or strip.

A precisely adjusted lubrication and an undamaged metal sheet or strip surface are particularly relevant for satisfying forming or superplastic forming results, which can be achieved by a metal sheet with a coating according to the invention.

A metal strip may be cut to length into multiple metal sheets, for example. Multiple metal sheets may then be stacked over each other, without damaging the surface of the metal sheets. A maximum protection is provided when the metal sheet has a coating on both sides of the metal sheet.

According to an embodiment of the metal sheet according to the invention, the metal sheet is made of aluminium or an aluminium alloy. Aluminium alloys can be particularly damageable due to their softness compared to steel for example. Therefore aluminium or aluminium alloy sheets require an increased protection during handling.

Aluminium alloys particularly capable of superplastic forming are the aluminium alloys AA 5083, 2004 and 7475, for example.

However, since superplasticity is not a strict alloy property, but a structurally based property, it is possible that a wide range of further alloys can be brought into a superplastic state for example by suitable mechanical or thermal measures. Nevertheless, the following criteria have been found to promote superplasticity.

With respect to the superplastic forming process the forming should take place at a homologous temperature of = 0.5 (i.e. at a temperature larger than half the melting point temperature of the metal in Kelvin). Additionally, the characteristic forming speed needs to be kept comparably low. Typical superplastic forming temperatures of aluminium alloys are in the range of = 400°C, preferably = 450°C, and preferably not above 550°C. Therefore, it is particularly advantageous to provide lubricating properties at these higher temperatures.

With respect to the metal used, a fine grain structure should be provided in the metal, i.e. a grain size of = 15µm, preferably = 10µm. Furthermore, an isotropic metal sheet surface and a preferably constant sheet thickness have to be proven advantageous. Therefore, an undamaged surface is particularly relevant for metal sheets or strips which are going to undergo superplastic forming.

According to a further teaching of the invention the objective is also solved by a method for manufacturing a coated metal sheet or strip according to the invention comprising the steps of providing a metal sheet or strip capable of forming, in particular of superplastic forming, and applying a coating according to the invention.

The metal sheet or strip is in particular made of aluminium or an aluminium alloy.

By applying a coating according to the invention to a metal sheet or strip capable of forming, an improved handling and preparation of the metal sheet can be achieved, since a secure handling of the metal sheet or strip may be provided when the protective base material is not yet selectively removed. At the same time a less laborious and more accurate lubrication before forming the metal sheet or strip is achieved by at least partially selectively removing the protective base material. There is no need for any manual and inhomogeneous application of a lubricant.

According to an embodiment of the method according to the invention, the coating is applied by coil coating, format coating, hot lamination, roll cladding or (co-)extrusion coating. Format coating can in particular use hot lamination. Alternatively, a powder coating, such as in rotational moulding may be used. In this way a precise amount of coating and therefore a precise amount of lubricant can be applied to the metal sheet by adjusting the thickness of the coating or by adjusting the ratio of lubricant and protective base material. The application of the coating may be performed directly after the production of the metal sheet or strip, for example in a rolling train. A coil coating, hot lamination, roll cladding or extrusion coating device may be implemented into the rolling train, for example. Thus, the sheet is protected from damages directly after its production. However the sheet may also be coated in a separate device. For example, a metal strip may be coated before or after being cut to length to provide coated metal sheets. A coil-to-coil or reel-to-reel process or format coating may be used for this.

According to an embodiment of the method according to the invention, the method further comprises the step of handling the coated metal sheet or strip, in particular (re)stacking, stocking and/or transporting.

When the metal sheet or strip is handled before the protective base material is at least partially selectively removed, a protection from damages and scratches can be provided by the coating having mechanically protective properties mainly due to the protective base material. Of course, the metal sheet or strip may also be handled partially without being mechanically protected, though. Preferably, handling takes place at least in part in temperature range TR₁.

According to a further embodiment of the method according to the invention, the method further comprises the steps of at least partially selectively removing the protective base material, in particular after handling, and forming, in particular superplastic forming of the metal sheet or strip.

After handling, such as (re)stacking or transporting, no more mechanical protection of the metal sheet is needed. By at least partially selectively removing the protective base material, for instance by heating the coated metal sheet in order to depolymerise and/or evaporate the protective base material, the protective function of the coating is automatically reduced or eliminated without having to remove any protection foils, films or layers. At the same time the coating has lubricating properties for supporting the forming of the metal sheet or strip due to the lubricant comprised in the coating. Further, there is a reduced risk of impeding the lubrication properties by a too significant presence of the protective base material. Since the protective base material is at least partially selectively removed, mainly the lubricant remains on the surface of the metal sheet. The forming is preferably performed in the temperature range TR₂.

The forming is preferably hot forming or superplastic forming. Superplastic forming takes place at elevated temperatures, while well defined lubrication and an undamaged surface is demanded. Therefore, the method according to the invention in combination with superplastic forming is particularly advantageous.

Forming and in particular superplastic forming are preferably realized by blow forming, vacuum forming or thermoforming. For superplastic forming the temperature is preferably at least 400°C, particularly at least 450°C.

According to another embodiment of the method according to the invention, at least a significant part of the protective base material from the coated metal sheet or strip is thermally removed. If at least a significant part of the protective base material is thermally removed, at least 50% by weight, preferably at least 90% by weight, more preferably at least 99% by weight, of the protective base material is removed. That means that in particular a complete removal of the protective base material of up to 100% is possible, as well. A thermal removal takes in particular place below and/or in the temperature range TR₂, in particular after handling and before forming of the coated metal sheet or strip.

When a significant part of the protective base material is thermally removed, for example by depolymerisation and/or evaporation, a selective removal of the protective base material is facilitated. Such a selective removal is in particular advantageous in combination with superplastic forming step of the metal sheet or strip, since the metal sheet or strip has to undergo a heating anyway.

However, when, according to another embodiment of the method according to the invention, residues of the protective base material remain on the metal sheet or strip after at least partially selectively removing the protective base material, the residues improve the sticking of the lubricant to the metal sheet or strip surface, such that less lubricant remains in the forming tool. Residues are understood to mean less than 50% by weight, preferably less than 10% by weight, more preferably less than 1% by weight, of the initial protective base material. The residues, however, can be chemically different from the base material due to an incomplete evaporation.

For further preferred embodiments of the different teachings of the invention and their advantages it is referred to the dependent claims and also to the description of the other teachings of the invention.

There are numerous possibilities of further developing and designing the coating, the metal sheet or strip and the method according to the invention. It is referred on the one hand to the patent claims subordinate to the independent patent claims and on the other hand to the description of exemplary embodiments of the invention in the drawing. The drawing shows in
- Fig. 1: a partial schematic cross-section of an exemplary embodiment of a metal sheet according to the invention with an exemplary embodiment of a coating according to the invention;
- Fig. 2: a schematic side view of multiple stacked metal sheets as shown in Fig. 1;
- Fig. 3: an illustration of exemplary temperature ranges TR₁ and TR₂ ;
- Fig. 4: an illustration of different method steps of an exemplary embodiment of a method according to the invention.

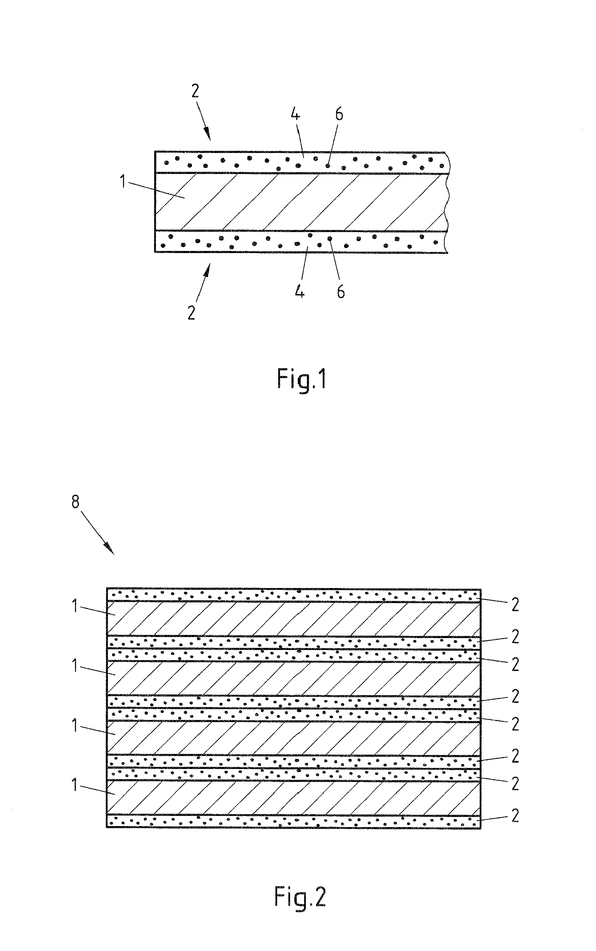

Fig. 1 shows a partial schematic cross section of an exemplary embodiment of a metal sheet 1 according to the invention with an exemplary embodiment of a coating 2 according to the invention. The metal sheet 1 is in this case an aluminium alloy sheet capable of superplastic forming. The metal sheet 1 is coated with the coating 2 comprising a polypropylene (PP) matrix as a protective base material 4 and a lubricant 6 suitable for lubrication during a superplastic forming process. The lubricant 6 may be graphite, boron nitride, brucite and/or talcum. The lubricant 6 is contained in a PP matrix, in this example. The coating 2 may be manufactured by compounding the lubricant 6 into the PP matrix 4 in the form of a masterbatch. The coating 2 is applied on both sides of the metal sheet 1, substantially covering the whole surface of the metal sheet 1.

The metal sheet 1 having the coating 2 is shown before a selective removal of the protective base material 4, for example in a temperature range TR₁. Therefore, the coating 2 has mechanical protective properties, but substantially no lubricating properties. The metal sheet 1 is thus protected from scratches and superficial damage due to handling. By adjusting the thickness of the coating 2 and/or by adjusting the amount of lubricant 6 in the coating 2, the lubricating properties of the coating 2 can be adjusted, when at least in part the protective base material is selectively removed, for example by heating the metal sheet to a temperature range TR₂ or by chemically removing at least a part of the protective base material.

Fig. 2 shows a schematic view of multiple stacked metal sheets 1 as already shown in Fig. 1 providing a stack 8. The metal sheets 1 are stacked over one another, such that the metal sheets 1 are separated by the coating 2. In this case the metal sheets 1 are provided with a double-sided coating 2, resulting in two adjacent coatings 2 between the metal sheets 1. The topside and the bottom side of the stack 8 are also protected by coatings 2. As can be seen, during handling, such as stacking, of the metal sheets 1, the surfaces of the metal sheets 1 are protected by the coating 2. The metal sheets 1 are therefore particularly suited for superplastic forming, which process demands an undamaged surface and a constant thickness of the metal sheet 1.

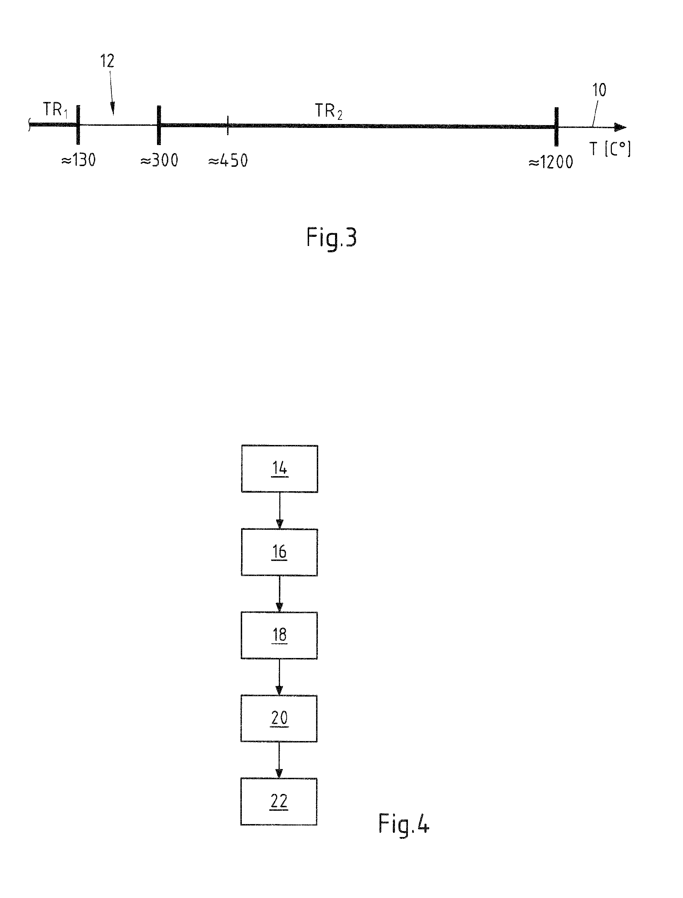

Fig. 3 shows an illustration of exemplary temperature ranges TR₁ and TR₂, in case at least partial selective removal of the protective base material is realized by heating the coating and the metal sheet 1, respectively. Fig. 3 shows an axis 10 for illustrating the temperature in °C. The temperature range TR₂ and the upper end of the temperature range TR₁ are drawn on the axis 10. Up to a temperature of about 130°C, the coating 2 can have mechanical protective properties and can protect the surface of the metal sheet 1. Above about 130°C the PP matrix 4 starts to melt and the coating 2 cannot provide sufficient mechanical protective properties anymore. In the transitional temperature range 12 above the first temperature range TR₁, the PP matrix 4 continues melting and starts depolymerising and/or evaporating. In the temperature range 12 the coating may not yet provide lubricating properties. However, when a significant part of the PP matrix 4 has dissolved and/or evaporated, the coating 2 can provide lubricating properties when entering the second temperature range TR₂ at approximately 300°C. In this example, the temperature ranges TR₁ and TR₂ are separated. The lubricating properties of the coating 2 may exemplarily extend up to about 1200°C. At higher temperatures the lubricant may not work properly.

It is noted, that the above temperatures are only illustrative and may vary strongly depending on the protective base material and the lubricant used.

The temperature range TR₂ further comprises temperatures of about 450°C and above. These temperatures are specifically suitable for superplastic forming of aluminium alloys.
At least in parts of the temperature range TR₂ the PP matrix 4 of the coating 2 is not yet completely evaporated. Rather, polymer residues remain on the surface of the metal sheet 1 positively affecting the adhesion of the lubricant 6 to the metal sheet 1 during forming.

Fig. 4 shows an illustration of different method steps of an exemplary embodiment of a method according to the invention. In this example, the method for manufacturing a coated metal sheet or strip comprises the method steps 14 to 22. However, the method may also consist of single method steps or different combinations of the method steps 14 to 22.

First, a metal sheet or strip, for example metal sheet 1, capable of forming is provided in step 14. The metal strip can be provided on a coil, for example. Alternatively, a metal sheet may be provided.

In step 16, a coating according to the invention, for example coating 2, is then applied to the surface of the metal sheet or strip. The coating can be applied by coil coating, roll cladding, hot lamination or extrusion coating, for example, in order to apply a precise amount of coating 2 and therefore a precise amount of lubricant 6 to the metal sheet or strip.

In case the coating 2 is applied to a metal strip, the metal strip may be cut in length before or after the coating process to provide coated metal sheets 1.

By applying a coating according to the invention to the metal sheet, an improved handling of the metal sheet can be achieved, since a secure handling of the metal sheet is provided before an at least partial selective removal of the protective base material is performed.

Afterwards, in step 18, the coated metal sheet is handled, for example (re)stacked, stocked and/or transported. A stacking is exemplarily shown in Fig. 2. When the metal sheet is handled before the protective base material is at least partially selectively removed, a protection from damages and scratches can be provided by the coating having mechanical protective properties mainly due to the protective base material, for example the PP matrix 4.

In step 20, the coated metal sheet is heated to the temperature range TR₂ in order to at least partially selectively remove the protective base material. By simply at least partially selectively removing the protective base material, a less laborious and more accurate lubrication before forming the metal sheet is achieved, since there is no need for any removal of protective films, foils or layers or for any manual and thus inhomogeneous application of a lubricant. In this case, the selective removal is achieved by heating the coated metal sheet to the temperature range TR₂. A significant part of the protective base material, such as the PP matrix 4, may depolymerise and/or evaporate and thus be removed from the metal sheet. The coating thus provides lubricating properties for supporting the forming of the metal sheet or strip in the temperature range TR₂ due to the lubricant comprised in the coating. However, other removal methods may be applied, such as a chemical removing of the protective base material. Since the amount of applied lubricant was precisely defined by the amount of lubricant in the coating and/or by precisely adjusting the coating thickness, a precise amount of lubricant is now applied to the metal sheet.

In method step 22, forming of the metal sheet takes place. The forming is performed in the temperature range TR₂, for example by blow forming, vacuum forming or thermoforming. The forming, for example superplastic forming, may be performed between 450°C and 520°C. In this temperature range, polymer residues can remain on the metal sheet in order to improve the sticking of the lubricant to the metal sheet surface, such that less lubricant remains in the forming tool.

## Claims

1. Coating of a metal sheet or strip comprising
- a lubricant (6) and
- a protective base material (4),
wherein the lubricant (6) is contained in the protective base material (4) and
wherein the protective base material is at least in part selectively removable.

2. Coating according to claim 1,
**characterized in that** the lubricant (6) comprises graphite, boron nitride, brucite, montmorillonite, mica, muscovite, molybdenum sulfide, polytetrafluoroethylene (PTFE, Teflon) and/or talcum.

3. Coating according to claim 1 or 2,
**characterized in that** the protective base material (4) is at least partially thermally, chemically and/or physically removable, preferably by evaporation, in particular without a significant pyrolysis deposit.

4. Coating according to any of the claims 1 to 3,
**characterized in that** the protective base material (4) is a polymer matrix, preferably comprising polymers of propylene, ethylene, styrene, isobutylene, tetrahydrofurane, methylmethacrylate and/or alphamethylstyrene.

5. Coating according to any of the claims 1 to 4, **characterized in that** the lubricant (6) is compounded into the protective base material (4) and/or introduced into the protective base material (4) in the form of a masterbatch.

6. Coating according to any of the claims 1 to 4,
**characterized in that** the coating (2) comprises one or more additional functional layers, in particular providing one ore more functions of friction reduction, bonding, protection of the lubricant (6), isolation of the lubricant (6) and separability.

7. Coating according to any of the claims 1 to 6,
wherein in a first temperature range TR₁ the coating (2) has mechanically protective properties and
wherein in a second temperature range TR₂, preferably higher than the first temperature range TR₁, the coating (2) has lubricating properties.

8. Coating according to claim 7,
**characterized in that** the temperature range TR₂ comprises a temperature = 400°C, in particular = 450°C.

9. Metal sheet or strip
capable of forming, in particular of superplastic forming, and
having a coating (2) according to any of the claims 1 to 8 at least partially on one or on both sides of the metal sheet or strip (1).

10. Metal sheet or strip according to claim 9, **characterized in that** the metal sheet or strip (1) is made of aluminium or an aluminium alloy.

11. Method for manufacturing a metal sheet or strip according to claim 9 or 10 comprising the steps of
- providing a metal sheet or strip capable of forming, in particular of superplastic forming, and
- applying a coating according to any of the claims 1 to 8.

12. Method according to claim 11,
**characterized in that** the coating is applied by coil coating, format coating, hot lamination, roll cladding or (co-)extrusion coating.

13. Method according to claim 11 or 12,
further comprising the step of
- handling the coated metal sheet or strip, in particular (re)stacking, stocking and/or transporting.

14. Method according to any of the claims 11 to 13,
further comprising the steps of
- at least partially selectively removing the protective base material, in particular after handling, and
- forming, in particular superplastic forming, of the metal sheet or strip.

15. Method according to claim 14,
**characterized in that** at least a significant part of the protective base material from the coated metal sheet or strip is thermally removed.

16. Method according to claim 14 or 15,
**characterized in that** residues of the protective base material remain on the metal sheet or strip after at least partially selectively removing the protective base material.
